# EUROPEAN PATENT SPECIFICATION

(11) **EP 1 733 581 B1**
(45) Date of publication and mention of the grant of the patent: **11.08.2010**
(21) Application number: 05722104.6
(22) Date of filing: 21.03.2005
(51) Int. Cl.: H04W 88/02

(54) **SUBSCRIBER IDENTITY MODULE**
TEILNEHMER-IDENTITÄTSMODUL
MODULE D'IDENTITE D'ABONNE

(30) Priority: 31.03.2004 NO 20041347
(43) Date of publication of application: 20.12.2006
(73) Proprietor: Telenor ASA, 1331 Fornebu (NO)
(72) Inventor: CALVET, Juan, Carlos Lopez, N-0768 Oslo (NO); NOLL, Josef, N-1084 Oslo (NO)
(74) Representative: Onsagers Ltd
(86) International application number: PCT/NO2005/000102
(87) International publication number: WO 2005/096651

(56) References cited:
- CA-A1- 2 293 393
- US-A1- 2003 006 280

## Description

### Technical field

The present invention relates in general to mobile communication, wireless security and authentication. More specifically, the invention relates to a subscriber identity module for a mobile communication terminal, and a mobile communication terminal comprising such a subscriber identity module. The invention also relates to a method for providing secure data communication between a subscriber identity module and an external communication device, for execution by such a subscriber identity module, and to uses of a subscriber identity module or a mobile terminal equipped with such a module for authentication purposes.

### Background of the invention

A subscriber identity module, or SIM card, is a removable module for use with mobile communication terminals, such as GSM mobile telephones. The SIM card contains subscriber specific data and is, in use, accessible by the central processing unit of the mobile terminal. The SIM card typically also comprises features for authenticating a user/subscriber. The SIM card includes a processing unit, a memory device and I/O devices for communication with the processing unit of the mobile terminal. The memory device contains a subscriber authentication key and computer program instructions for causing the SIM card processing unit to authenticate the user/subscriber.

WO-03/081934 discloses a mobile telephone provided with a SIM card. The mobile telephone is also provided with an RFID tag for authentication purposes. User-specific, interrogatable information is written into the RFID tag by means of the mobile telephone's processing unit. As the RFID tag is attached to the mobile telephone, only a mobile telephone having this built-in feature can be used for authentication.

WO-98/58509 discloses a mobile phone provided with a SIM card. The SIM card is further provided with a wireless interface or communication module, providing data transmission between the SIM card and an external device such as another SIM card in another mobile telephone, a computer or a cash register. This related background art provides for a separate communication channel between the external device and the SIM card. However, the publication apparently does not indicate a solution for making the SIM card interrogatable by an external interrogating device.

WO-99/25140 discloses a SIM card for a subscriber on a GSM mobile radio comprising a contact zone to be connected with a mobile apparatus and electronic storage means containing parameters for identifying subscribers of the mobile radio network. The storage means can also contain one or several other identification parameters, whereby the subscribers of other systems can be identified in these other systems. The other system can accede for example by an inductance coil, to said other identification parameters. The additional identification parameters can be reloaded or modified by remote control from a SIM server.

None of the publications appear to disclose a simple, effective and reliable solution for using the SIM card as a remotely activated authentication device.

None of the publications appear to disclose a simple, effective and reliable method for providing secure wireless data communication between the subscriber identity module and an external interrogating device.

### Summary of the invention

An objective of the present invention is to provide a subscriber identity module, a mobile terminal and a method for providing secure data communication between a subscriber identity module and an external interrogating device, whereby at least some of the above mentioned drawbacks of the related background art are overcome.

In accordance with a first aspect of the present invention, there is provided a subscriber identity module as indicated in the appended independent claim 1.

In accordance with a second aspect of the present invention, there is provided a mobile communication terminal as indicated in the appended independent claim 16.

In accordance with a third aspect of the present invention, there is provided a method for providing secure data communication between a subscriber identity module and an interrogating device, as indicated in the appended independent claim 20.

The invention also relates to the use of a subscriber identity module as an authentication token, as indicated in claims 13-15.

The invention also relates to the use of a mobile communication terminal as an authentication token, as indicated in claims 17-19.

Further advantageous embodiments of the invention are set forth in the dependent claims.

Additional features and principles of the present invention will be recognized from the detailed description below.

It is to be understood that both the foregoing general description and the following detailed description are exemplary and explanatory only and are not restrictive of the invention, as claimed.

### Brief description of the drawings

The accompanying drawings illustrate a preferred embodiment of the invention. In the drawings,
Fig. 1 is a schematic block diagram illustrating a first embodiment of a subscriber identity module according to the invention,
Fig. 2 is a schematic block diagram illustrating a second embodiment of a subscriber identity module according to the invention,
Fig. 3 is a schematic block diagram illustrating a system for merging RFID and mobile communication services, enabled by the present invention, and
Fig. 4 is a flowchart illustrating a method according to the invention,
Fig. 5 is a schematic block diagram illustrating the physical layout of a subscriber identity module according to the invention, and
Fig. 6 is a schematic block diagram illustrating an analog front end module for connecting the antenna and the SIM/RFID controller.

### Detailed description of the invention

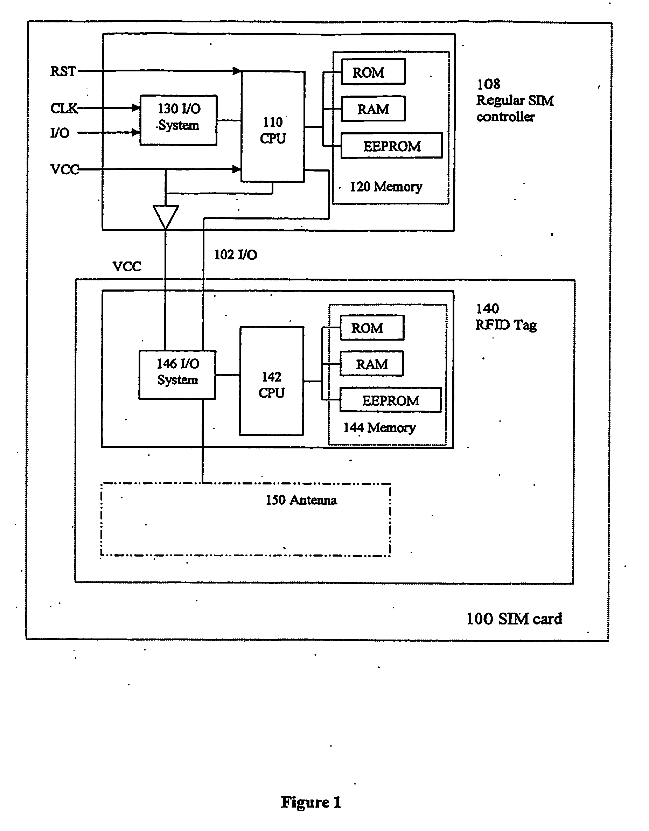

Fig. 1 is a schematic block diagram illustrating a first embodiment of a subscriber identity module according to the invention.

Fig. 1 illustrates a "bi-card" embodiment, wherein the SIM card 100 comprises separate processing devices, memory devices and I/O devices for the regular SIM functionality and the RFID functionality, respectively.

The SIM card 100 is arranged for use with a mobile communication terminal (not illustrated) such as a GSM enabled mobile telephone. The SIM card 100 comprises a processing device 110, a memory device 120, an I/O device 130, corresponding to a regular SIM controller 108 with regular SIM functionality.

The I/O device 130 comprises an interface between the SIM card and the mobile communication terminal, typically including electric connections provided on the surface of the SIM card.

The memory device 120 may comprise volatile and non-volatile memory portions, such as, e.g., RAM, ROM, EEPROM, and Flash memory.

The SIM card 100 also comprises a wireless communication device 140, in particular an interrogatable transponder 140.

The interrogatable transponder 140 is an active RFID tag. The transponder 140 is operatively controllable by the processing device 110, indicated by the line referred to by I/O. This communication line between the processing unit 110 and the transponder 140 enables the SIM card 100 to trigger events in the RFID tag and vice versa. It could also transmit certain amounts of data.

In particular, the power of the transponder 140 is controlled by the processing device 110, giving the possibility of turning the tag on and off as desired, operatively controlled by the processing device 110.

More specifically, the transponder may be operatively enabled or disabled, controlled by an on/off signal provided by the mobile communication terminal via the I/O device 130.

In one embodiment, the on/off signal is provided by a user via a user interface, such as a keyboard, in the mobile terminal. In another embodiment, the on/off signal is provided to the mobile communication terminal by a mobile communication operator, in particular by a command transmitted to the mobile communication terminal by the operator.

In either case, the resulting remote enabling/disabling function of the RFID tag involves a security improvement, as the existing problem of tracing or copying continuously activated RFID tags may be overcome or reduced.

The transponder 140 comprises identification data contained in a memory 144. The identification data may be configured or set by the processing device 110.

In particular, the identification data is provided to the transponder by the mobile communication terminal via the I/O device 130.

The identification data is preferably transmitted to the mobile communication terminal by a mobile communication operator.

By this feature, the identification data stored in the RFID tag may be changed or rewritten with new data supplied and transmitted by the mobile communication operator. This leads to the useful result that if the RFID tag is illegally/fraudulently copied, the operator will have the possibility of writing a new ID into the RFID tag without having to physically change the SIM card.

The memory 144 may comprise volatile and non-volatile memory portions, such as, e.g., RAM, ROM, EEPROM, and Flash memory.

When the transponder 140 is interrogated by an external interrogating RF device (not illustrated), the transponder 140 is arranged to transmit, via the antenna 150, a RF signal coded with the identification data contained in the memory 144.

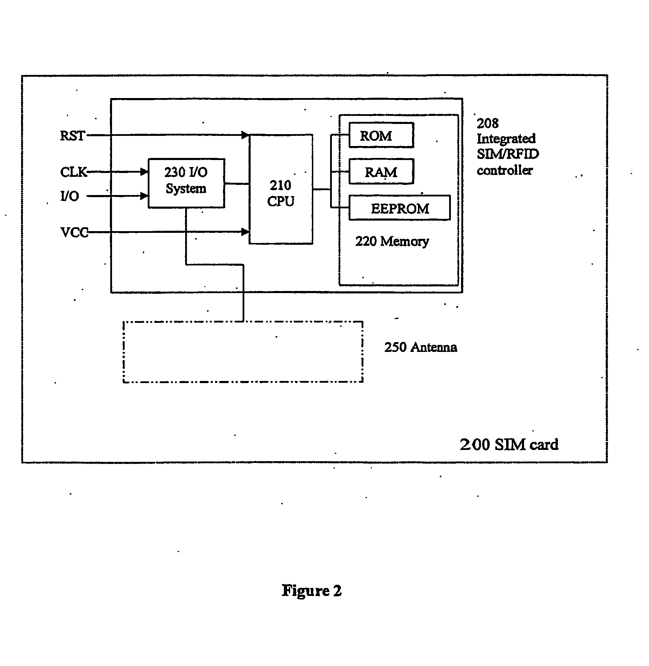

Fig. 2 is a schematic block diagram illustrating a second embodiment of a subscriber identity module according to the invention.

This embodiment mainly corresponds to the embodiment illustrated in fig. 1. However, the transponder comprises an antenna, and the RFID transponder functionality is implemented by means of the processing device, the memory device and the I/O device that are included in the subscriber identity module, i.e. the controller components also used for the regular SIM functionality.

Fig. 2 thus illustrates a "hybrid-card" embodiment, wherein the SIM card 200 comprises a processing device 210, memory devices 220 and I/O devices 230 which are shared between the regular SIM functionality and the RFID functionality.

The SIM card 200 is arranged for use with a mobile communication terminal (not illustrated) such as a GSM enabled mobile telephone.

The memory device 220 may comprise volatile and non-volatile memory portions, such as, e.g., RAM, ROM, EEPROM, and Flash memory.

The SIM card 200 also comprises a wireless communication device 140, in particular an interrogatable transponder 140, comprising an antenna 250 and the RFID functionality provided by the processing device 210, the memory devices 220 and the I/O devices 230.

The interrogatable transponder 240 constitutes an active RFID tag, operatively controllable by the processing device 210.

The transponder 240 comprises identification data contained in the memory 220. The identification data may be configured or set by the processing device 210.

When the transponder 240 is interrogated by an external interrogating RF device (not illustrated), the transponder 240 is arranged to transmit, via the antenna 250, a RF signal coded with the identification data contained in the memory 220.

This second embodiment is made possible since the basic architecture of both active RFID tags and SIM cards are so similar. This embodiment proposes a slightly more powerful SIM card controller with an external RFID antenna. In this case there is no need for communication between two separate cards or modules. As appears from fig. 2, the antenna 250 is external to the SIM/RFID controller 208, but still integrated on the SIM card 200.

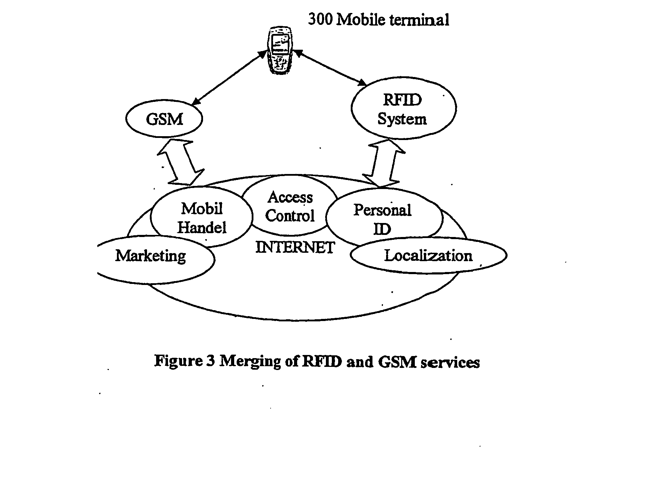

Fig. 3 is a schematic block diagram illustrating a system for merging RFID and mobile communication services, enabled by the present invention.

A mobile terminal 300, such as a mobile telephone 300, is provided with a subscriber identity module as disclosed above.

The mobile terminal 300 brings many new opportunities by merging the services typically provided by RFID tags with the infrastructure provided by GSM

The idea is that events initiated by the RFID will trigger events in the mobile phone and its services, and vice versa.

Adopting the RFID technology in the SIM cards used in mobile phones avoids many practical problems that IrDA and Bluetooth have, such as pairing and alignment, bringing a fast, easy and secure way to wirelessly interact with other systems.

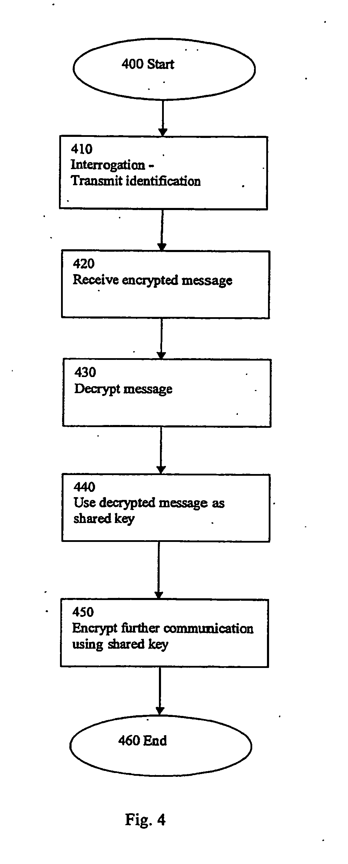

Fig. 4 is a flow chart illustrating a method according to the invention.

The method is a Public Key Infrastructure (PKI) based process for execution by a subscriber identity module, i.e. for execution by the processing device in such a subscriber identity module, according to the invention. The purpose of the method is to provide secure data communication between the subscriber identity module and an external interrogating device, such as, e.g., a RFID reader (an RFID communication/interrogation device) of a door access system.

The method utilizes a private key stored in SIM card with the purpose of providing a secure communication between the external communication device and the RFID transponder included in the SIM card. This means that the RFID transponder and thus the RFID enabled SIM card can make use of the entire PKI infrastructure that is already behind the SIM card to increase the communication security between the RFID tag and the reader.

When a RFID transponder identifies itself to an external reader, the reader will then have enough information to retrieve the correspondent mobile phone's public key in order to start a communication session with the tag and possibly exchange a shared key to encrypt further communication between the tag and the reader.

The subscriber identity module or SIM card is operatively arranged in a mobile terminal such as a GSM mobile telephone. The SIM card comprises, in accordance with the detailed description of one of the embodiments disclosed in fig. 1 or fig. 2 above, a processing device, a memory device containing a private key, an I/O device, and an interrogatable transponder.

The method starts at the initiation step 400. The method further comprises the following steps, preferably performed in the indicated order:
In step 410, the RFID part of the SIM card is interrogated by the external interrogating device. Upon this interrogation, as a result of the interrogation, the SIM card transmits the identification data.

Next, in step 420, an encrypted message is received from the external communication device. The message is encrypted with a public key associated with the identification data transmitted in the foregoing step 410. The public key is provided by the external interrogating device, preferably by a search in a database, in order to match the identification with the corresponding public key.

Next, in step 430, the encrypted message is decrypted using the private key. Next, in step 440, the decrypted message is used as a shared key.

In step 450 this shared key is used to encrypt further data communication between the subscriber identity module and the external interrogating device.

In particular, the encryption is performed by using a predetermined symmetric key algorithm such as 3DES, which is supported by the SIM card and the reader.

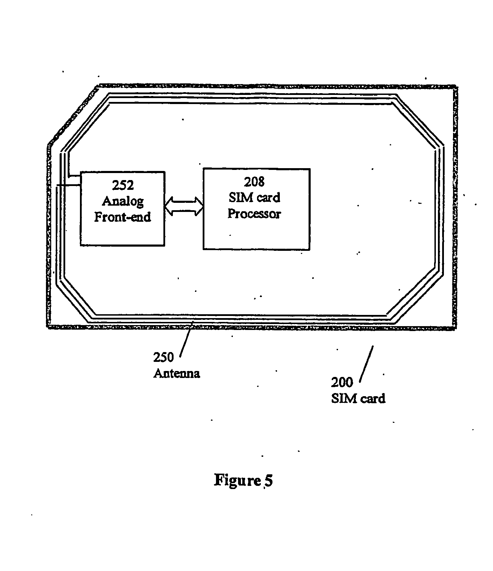

Fig. 5 is a schematic block diagram illustrating the physical layout of a subscriber identity module according to the invention.

Fig. 5 illustrates an exemplary layout of the "hybrid-card" embodiment 200 of the subscriber identity module according to the invention, as described above with reference to fig. 2. The skilled person will realize that a similar layout also could be used for the "bi-card" embodiment 100 described above with reference to fig. 1.

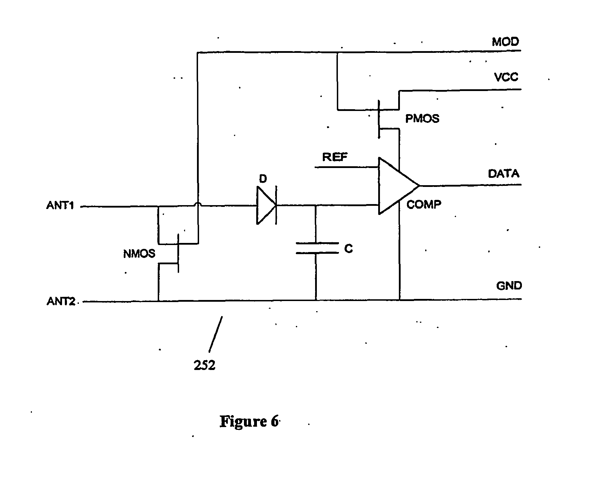

The physical dimensions and connection terminals of the SIM card 200 is preferably designed in accordance with the standards GSM 11.11 and ISO 7816, and thus, they are not further described in the present specification. The antenna 250 is realised as a wire loop extending along the edge of the card 200, preferably as a multiturn loop. The number of turns is preferably 3, as illustrated in fig. 5. The antenna 250 is connected to the analog front-end module 252 (not shown in fig. 2), which is further described below with reference to fig. 6. The analog front-end module 252 is further connected to the integrated SIM card processor 208.

Fig. 6 is a schematic block diagram illustrating the principles of an exemplary analog front end module 252 for connecting the antenna and the SIM/RFID controller. The analog front end module 252 comprises an MOS transistor NMOS connected in parallel with the antenna input ANT1, ANT2. Another MOS transistor PMOS is connected between the voltage supply VCC and the voltage supply input of the comparator COMP. The gate of the NMOS transistor and the gate of the PMOS transistor are both connected to the control signal MOD. During receiving of data from the antenna the MOS transistors are turned off by setting the control signal MOD low. Then the signal received by the antenna is demodulated by the diode D and the capacitor C and fed to the comparator COMP to bring the signal up to a derived signal DATA with correct level. The reference level REF of the comparator is chosen as appropriate.

### Use examples

The following examples illustrate useful applications for the present invention.

### Access control use

The SIM card according to the invention may be used as an authentication token for an access control system. Likewise, a mobile terminal which includes a SIM card according to the invention may also be used as an authentication token for an access control system.

In such an exemplary use scenario, a mobile phone equipped with an RFID enabled SIM card according to the invention is detected by an RFID reader at a door which is provided with an access control system. A number received by the RFID reader at the door is recognized in the access control system as a valid number, which means that the mobile telephone is a registered telephone in the access control system. The access control system will then send a challenge to the phone via the GSM network. The user is asked to type a PIN number, if the PIN number is correct a signal is sent , via RFID and the door is opened. In this case the user is authenticated with something he has (mobile phone with RFID tag) with something he has (PIN number).

### Mobile commerce use

The SIM card according to the invention may be used as an authentication token for a mobile commerce system such as the Telenor MobilHandel. Likewise, a mobile terminal which includes a SIM card according to the invention may also be used as an authentication token for such a mobile commerce system.

In such an exemplary use scenario, a user, provided with a mobile phone equipped with an RFID enabled SIM card according to the invention, is located in front of a cash register in a commerce establishment. After deciding which good he wants to purchase, the RFID tag in the mobile phone is read by the machine, and since the machine now knows to which phone number this tag belongs to, a request for purchase is sent via GSM using a M-Commerce service to the mobile phone. The user will then accept the transaction typing his PIN number, which is then sent back to the M-Commerce service and back to the cash register where the goods are dispensed.

In both above cases the RFID tag number is directly linked with the mobile phone number in a central database. So whenever the tag is detected most of the services provided by a mobile phone can potentially be used.

The SIM card according to the invention, or a mobile terminal which includes a SIM card according to the invention, may be used as an authentication token for other purposes as well.

### Electronic key scenario

In an electronic key scenario, an electronic key is sent to a mobile phone through an SMS. A door is controlled by an access control system which is configured to recognize an RFID enabled SIM card in a mobile telephone, according to the invention. The access control system is further configured to recognize the electronic key when the mobile phone is present. When the user arrives at the door, holding the mobile phone which exposes both values (key and RFID number) the door will automatically be opened.

### Security and privacy use

When a mobile phone is stolen, the RFID enabled SIM card can be deactivated remotely, avoiding any possible misuse. The RFID enabled SIM card could also be deactivated through the mobile phone to avoid been detected when this is not wanted.

### Business issues

The invention solves a problem for any business that wishes to adopt the RFID technology, in a way that there will not be a need to distribute RFID cards to the user, because potentially everyone with a mobile phone will already have a card.

Users will also benefit from such solution in a way that they will only need to carry their mobile phones in order to authenticate towards different services.

As most of the services offered by mobile phones, one of the biggest barriers to adopt the solution is that the market penetration has to be big enough to present an attractive alternative to already established businesses. This means that the solution should be able to function properly in all the mobile phones, and this is never an easy task.

Users will also have to renew their SIM cards, and this is implies a cost for Mobile Operators.

The above detailed description has explained the invention by way of example. A person skilled in the art will realize that numerous variations and alternatives to the detailed embodiment exist within the scope of the invention, as set forth by the appended claims.

## Claims

1. : Subscriber identity module for a mobile communication terminal, comprising a processing device, a memory device, an I/O device and a wireless communication device which is connected to an antenna included in said subscriber identity module,
wherein said wireless communication device is an interrogatable transponder, operatively controllable by said processing device and arranged to be operatively enabled or disabled, controlled by a signal provided by the mobile communication terminal via said I/O device.

2. Subscriber identity module according to claim 1,
wherein said signal is provided by a user interface in the mobile terminal.

3. Subscriber identity module according to claim 1,
wherein said signal is provided by a mobile communication operator.

4. Subscriber identity module according to claim 1,
wherein said interrogatable transponder comprises identification data contained in a memory, said identification data being configurable by said processing device.

5. Subscriber identity module according to claim 4,
wherein said identification data is provided by the mobile communication terminal
via said I/O device.

6. Subscriber identity module according to claim 5,
wherein said identification data is provided by a mobile communication operator.

7. Subscriber identity module according to claim 4,
wherein said interrogatable transponder is arranged to transmit a RF signal coded with said identification data when interrogated by an external interrogating RF device.

8. Subscriber identity module according to one of the claims 1-7,
wherein said transponder is an active RFID transponder.

9. Subscriber identity module according to claim 8,
wherein said transponder is a separate device, comprising a processing device, a memory device and an I/O device connected to an antenna.

10. Subscriber identity module according to claim 9,
wherein said transponder comprises an antenna, and wherein further RFID transponder functionality is implemented by means of the processing device and the memory device included in said subscriber identity module.

11. Use of a subscriber identity module according to one of the claims 1-10, as an authentication token.

12. Use of a subscriber identity module, according to claim 11,
as an authentication token for an access control system.

13. Use of a subscriber identity module, according to claim 11,
as an authentication token for a mobile commerce system.

14. Mobile communication terminal, comprising a subscriber identity module according to one of the claims 1-10.

15. Use of a mobile communication terminal
according to claim 14,
as an authentication token.

16. Use of a mobile communication terminal,
according to claim 15, as an authentication token for an access
control system.

17. Use of a mobile communication terminal,
according to claim 15, as an authentication token for a mobile
commerce system.

18. Method for execution by a subscriber identity module, for the purpose of providing secure data communication between the subscriber identity module and an external interrogating device, said subscriber identity module comprising a processing device, a memory device containing a private key, an I/O device, and a
wireless communication device which is connected to an antenna included in said subscriber identity module, the wireless communication device being an interrogatable transponder, operatively controllable by said processing device and arranged to be operatively enabled or disabled, controlled by a signal provided by the mobile communication terminal via said I/O device,
said method comprising the steps of
- transmitting identification data upon an interrogation by the external interrogating device,
- receiving an encrypted message from the external communication device, said message being encrypted with a public key associated with said identification data,
- decrypting said encrypted message using said private key,
- using the decrypted message as a shared key to encrypt further data communication between the subscriber identity module and the external interrogating device.

19. Method according to claim 18,
wherein said public key is provided by said external interrogating device by searching a database in order to match said identification with the corresponding public key.

## Patentansprüche

1. Teilnehmer-Identifizierungs-Modul für ein mobiles Kommunikationsendgerät, eine Verarbeitungsvorrichtung, eine Speichervorrichtung, eine E/A-Vorrichtung und eine drahtlose Kommunikationsvorrichtung aufweisend, die mit einer Antenne verbunden ist, die in dem Teilnehmer-Identifizierungs-Modul enthalten ist,
wobei die drahtlose Kommunikationsvorrichtung ein abfragbarer Transponder ist, der durch die Verarbeitungsvorrichtung operativ gesteuert werden kann und dazu eingerichtet ist, gesteuert durch ein Signal, das von dem mobilen Kommunikationsendgerät über die E/A-Vorrichtung bereitgestellt wird, operativ freigegeben oder gesperrt zu werden.

2. Teilnehmer-Identifizierungs-Modul nach Anspruch 1,
wobei das Signal durch eine Benutzerschnittstelle im mobilen Endgerät bereitgestellt wird.

3. Teilnehmer-Identifizierungs-Modul nach Anspruch 1,
wobei das Signal durch einen Mobilkommunikationsbetreiber bereitgestellt wird.

4. Teilnehmer-Identifizierungs-Modul nach Anspruch 1,
wobei der abfragbare Transponder Identifizierungsdaten umfasst, die in einem Speicher enthalten sind, wobei die Identifizierungsdaten mittels der Verarbeitungsvorrichtung konfigurierbar sind.

5. Teilnehmer-Identifizierungs-Modul nach Anspruch 4,
wobei die Identifizierungsdaten durch das mobile Kommunikationsendgerät über die E/A-Vorrichtung bereitgestellt werden.

6. Teilnehmer-Identifizierungs-Modul nach Anspruch 5,
wobei die Identifizierungsdaten durch einen Mobilkommunikationsbetreiber bereitgestellt werden.

7. Teilnehmer-Identifizierungs-Modul nach Anspruch 4,
wobei der abfragbare Transponder dazu eingerichtet ist, bei Abfrage durch eine externe abfragende HF-Vorrichtung ein mit den Identifizierungsdaten codiertes HF-Signal zu übertragen.

8. Teilnehmer-Identifizierungs-Modul nach einem der Ansprüche 1 bis 7, wobei der Transponder ein aktiver RFID-Transponder ist.

9. Teilnehmer-Identifizierungs-Modul nach Anspruch 8,
wobei der Transponder eine separate Vorrichtung ist, die eine Verarbeitungsvorrichtung, eine Speichervorrichtung und eine mit einer Antenne verbundene E/A-Vorrichtung aufweist.

10. Teilnehmer-Identifizierungs-Modul nach Anspruch 9,
wobei der Transponder eine Antenne aufweist, und wobei weitere RFID-Transponderfunktionalität mittels der im Teilnehmer-Identifizierungs-Modul enthaltenen Verarbeitungsvorrichtung und Speichervorrichtung implementiert ist.

11. Verwendung eines Teilnehmer-Identifizierungs-Moduls nach einem der Ansprüche 1 bis 10 als Authentifizierungsberechtigungszeichen.

12. Verwendung eines Teilnehmer-Identifizierungs-Moduls nach Anspruch 11 als Authentifizierungsberechtigungszeichen für ein Zutrittskontrollsystem.

13. Verwendung eines Teilnehmer-Identifizierungs-Moduls nach Anspruch 11 als Authentifizierungsberechtigungszeichen für ein mobiles Geschäftstransaktionssystem.

14. Mobiles Kommunikationsendgerät mit einem Teilnehmer-Identifizierungs-Modul nach einem der Ansprüche 1 bis 10.

15. Verwendung eines mobilen Kommunikationsendgeräts nach Anspruch 14 nach als Authentifizierungsberechtigungszeichen.

16. Verwendung eines mobilen Kommunikationsendgeräts nach Anspruch 15 als Authentifizierungsberechtigungszeichen für ein Zutrittskontrollsystem.

17. Verwendung eines mobilen Kommunikationsendgeräts nach Anspruch 15 als Authentifizierungsberechtigungszeichen für ein mobiles Geschäftstransaktionssystem.

18. Verfahren zum Ausführen durch ein Teilnehmer-Identifizierungs-Modul, zum Zweck der Bereitstellung einer sicheren Datenkommunikation zwischen dem Teilnehmer-Identifizierungs-Modul und einer externen abfragenden Vorrichtung, wobei das Teilnehmer-Identifizierungs-Modul eine Verarbeitungsvorrichtung, eine einen privaten Schlüssel enthaltende Speichervorrichtung, eine E/A-Vorrichtung und eine drahtlose Kommunikationsvorrichtung aufweist, die mit einer in dem Teilnehmer-Identifizierungs-Modul enthaltenen Antenne verbunden ist, wobei die drahtlose Kommunikationsvorrichtung ein abfragbarer Transponder ist, der durch die Verarbeitungsvorrichtung operativ gesteuert werden kann und dazu eingerichtet ist, gesteuert durch ein Signal, das von dem mobilen Kommunikationsendgerät über die E/A-Vorrichtung bereitgestellt wird, operativ freigegeben oder gesperrt zu werden,
wobei das Verfahren die folgenden Schritte umfasst:
- Übertragen von Identifizierungsdaten bei einer Abfrage durch die externe abfragende Vorrichtung,
- Empfangen einer verschlüsselten Nachricht von der externen Kommunikationsvorrichtung, wobei die Nachricht mit einem öffentlichen Schlüssel verschlüsselt ist, der mit den Identifizierungsdaten assoziiert ist,
- Entschlüsseln der verschlüsselten Nachricht unter Verwendung des privaten Schlüssels,
- Verwenden der entschlüsselten Nachricht als gemeinsamen Schlüssel, um weitere Datenkommunikation zwischen dem Teilnehmer-Identifizierungs-Modul und der externen abfragenden Vorrichtung zu verschlüsseln.

19. Verfahren nach Anspruch 18,
wobei der öffentliche Schlüssel durch die externe abfragende Vorrichtung bereitgestellt wird, indem eine Datenbank nach einer Übereinstimmung der Identifizierung mit dem entsprechenden öffentlichen Schlüssel durchsucht wird.

## Revendications

1. Module d'identité d'abonné pour un terminal de communication mobile, comprenant un dispositif de traitement, un dispositif de mémoire, un dispositif E/S et un dispositif de communication sans fil qui est connecté à une antenne incluse dans ledit module d'identité d'abonné, dans lequel ledit dispositif de communication sans fil est un transpondeur interrogeable, contrôlable opérationnellement par ledit dispositif de traitement et agencé pour activé ou désactivé opérationnellement, contrôlé par un signal fourni par le terminal de communication mobile via ledit dispositif E/S.

2. Module d'identité d'abonné selon la revendication 1, dans lequel ledit signal est fourni par une interface utilisateur dans le terminal mobile.

3. Module d'identité d' abonné selon la revendication 1, dans lequel ledit signal est fourni par un opérateur de communication mobile.

4. Module d'identité d'abonné selon la revendication 1, dans lequel ledit transpondeur interrogeable comprend des données d'identification contenues dans une mémoire, lesdites données d'identification étant configurables par ledit dispositif de traitement.

5. Module d'identité d'abonné selon la revendication 4, dans lequel lesdites données d'identification sont fournies par le terminal de communication mobile via ledit dispositif E/S.

6. Module d'identité d'abonné selon la revendication 5, dans lequel lesdites données d'identification sont fournies par un opérateur de communication mobile.

7. Module d'identité d'abonné selon la revendication 4, dans lequel ledit transpondeur interrogeable est agencé pour transmettre un signal RF codé avec lesdites données d'identification lorsqu'il est interrogé par un dispositif RF d'interrogation externe.

8. Module d'identité d'abonné selon l'une des revendications 1 à 7, dans lequel ledit transpondeur est un transpondeur RFID actif.

9. Module d'identité d'abonné selon la revendication 8, dans lequel ledit transpondeur est un dispositif séparé, comprenant un dispositif de traitement, un dispositif de mémoire et un dispositif E/S connecté à une antenne.

10. Module d'identité d'abonné selon la revendication 9, dans lequel ledit transpondeur comprend une antenne, et dans lequel une autre fonctionnalité de transpondeur RFID est mise en oeuvre au moyen du dispositif de traitement et du dispositif de mémoire inclus dans ledit module d'identité d'abonné.

11. Utilisation d'un module d'identité d'abonné selon l'une des revendications 1 à 10, comme un jeton d'authentification.

12. Utilisation d'un module d'identité d'abonné selon la revendication 11, comme un jeton d'authentification pour un système de contrôle d'accès.

13. Utilisation d'un module d'identité d'abonné selon la revendication 11, comme un jeton d'authentification pour un système de commerce mobile.

14. Terminal de communication mobile, comprenant un module d'identité d'abonné selon l'une des revendications 1 à 10.

15. Utilisation d'un terminal de communication mobile selon la revendication 14, comme un jeton d'authentification.

16. Utilisation d'un terminal de communication mobile selon la revendication 15, comme un jeton d'authentification pour un système de contrôle d'accès.

17. Utilisation d'un terminal de communication mobile selon la revendication 15, comme un jeton d'authentification pour un système de commerce mobile.

18. Procédé pour l'exécution par un module d'identité d'abonné, dans le but de fournir une communication de données sécurisée entre le module d'identité d'abonné et un dispositif d'interrogation externe, ledit module d'identité d'abonné comprenant un dispositif de traitement, un dispositif de mémoire contenant une clé privée, un dispositif E/S, et un dispositif de communication sans fil qui est connecté à une antenne incluse dans ledit module d'identité d'abonné, le dispositif de communication sans fil étant un transpondeur interrogeable, contrôlable opérationnellement par ledit dispositif de traitement et agencé pour activé ou désactivé opérationnellement, contrôlé par un signal fourni par le terminal de communication mobile via ledit dispositif E/S, ledit procédé comprenant les étapes consistant à :
➢ transmettre des données d'identification lors d'une interrogation par le dispositif d'interrogation externe,
➢ recevoir un message chiffré en provenance du dispositif de communication externe, ledit message étant chiffré avec une clé publique associée auxdites données d'identification,
➢ déchiffrer ledit message chiffré en utilisant ladite clé privée,
➢ utiliser le message déchiffré comme une clé partagée pour chiffrer une autre communication de données entre le module d'identité d'abonné et le dispositif d'interrogation externe.

19. Procédé selon la revendication 18, dans lequel ladite clé publique est fournie par ledit dispositif d'interrogation externe en recherchant dans une base de données afin de faire concorder ladite identification avec la clé publique correspondante.
